Europäisches Patentamt

European Patent Office

Office européen des brevets

(11) Publication number: **0 148 960**
**B1**

(12) **EUROPEAN PATENT SPECIFICATION**

(45) Date of publication of patent specification: **14.03.90**

(51) Int. Cl.⁵: **G 07 F 7/10, H 04 L 9/16**

(21) Application number: **83307786.0**

(22) Date of filing: **21.12.83**

(54) Security in data communication systems.

(43) Date of publication of application:
**24.07.85 Bulletin 85/30**

(45) Publication of the grant of the patent:
**14.03.90 Bulletin 90/11**

(84) Designated Contracting States:
**AT DE FR GB IT NL SE**

(56) References cited:
**EP-A-0 064 779**
**EP-A-0 068 805**
**WO-A-82/02446**
**FR-A-2 493 645**
**GB-A-2 050 021**

**IBM TECHNICAL DISCLOSURE BULLETIN, vol. 24, no. 7B, December 1981, pages 3906-3909, New York, US; R.E. LENNON et al.: "PIN protection/verification for electronic funds transfer"**

(73) Proprietor: **International Business Machines Corporation**
**Old Orchard Road**
**Armonk, N.Y. 10504 (US)**

(72) Inventor: **Holloway, Christopher**
**1 Thorverton Court Thorverton Road**
**Cricklewood London NW2 1RD (GB)**

(74) Representative: **Blakemore, Frederick Norman et al**
**IBM United Kingdom Limited Intellectual Property Department Hursley Park**
**Winchester Hampshire SO21 2JN (GB)**

EP 0 148 960 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to improvements in the security of data communication systems. The invention finds particular application in electronic funds transfer networks such as those dedicated to home banking and the preferred embodiment to be described in such an application, although, as will become apparent, the invention is not limited to the home banking application and may find use in other data communication systems which require a similar approach to message authentication and authorisation of transactions.

The use of data communication networks to carry messages relating to financial transactions is becoming more common. Cash issuing terminals operated by a bank's customer using a magnetic stripe card and having a secret number (PIN) and connected on-line to a remote data processing machine are now commonplace. Automatic teller machines (ATM) which can perform more functions than just issue cash are now appearing in banks, and there is an economic pressure to reduce the amount of paper work (cheque processing, etc.) related to financial transactions.

Point of sale/electronic funds transfer (POS/EFT) is another development in which retailers have terminals connected to a packet switched networks and customers have their accounts debited on-line from the retailer's terminal whenever a purchase is made.

A description of a POS/EFT system is found in United Kingdom Patent Application No. 8324916 which also describes a system for user and message authentication checking. In these systems an electronic funds transfer system (EFT) is described in which retail terminals located in stores are connected through a public switched telecommunication system to card issuing agencies data processing centres. Users of the system are issued with intelligent secure bank cards, which include a microprocessor, ROS and RAM stores. The ROS includes a personal key (KP) and an account number (PAN) stored on the card when the issuer issues it to the user. Users also have a personal identity number (PIN) which is stored or remembered separately.

A transaction is initiated at a retail terminal when a card is inserted in an EFT module connected to the terminal. A request message including the PAN and a session key (KS) is transmitted to the issuers data processing centre. The issuer generates an authentication parameter (TAP) based upon its stored version of KP and PIN and a time variant parameter received from the terminal. The TAP is then returned to the terminal in a response message, and based upon an inputted PIN, partial processing of the input PIN and KP on the card a derived TAP is compared with the received TAP in the terminal. A correct comparison indicating that the entered PIN is valid.

The request message includes the PAN encoded under the KS and KS encoded under a cross-domain key. Message authentication codes (MAC) are attached to each message and the correct reception and regeneration of a MAC on a message including a term encoded under KS indicates that the received KS is valid and that the message originated at a valid terminal or card.

Other publications describing the prior art in EFT systems are as follows:

European Patent Publication 32193 (IBM Corporation) describes a system in which each user and retailer has a cryptographic key number — retailer's key Kr and user's key Kp — which is stored together with the user's account number and retailer's business number in a data store at the host central processing unit (cpu). The retailer's key and the user key are used in the encryption of data sent between the retailer's transaction terminal and the host cpu. Obviously only users or customers with their identity numbers and encryption keys stored at the host cpu can make use of the system. As the number of users expands there is an optimum number beyond which the time taken to look up corresponding keys and identity numbers is unacceptable for on-line transaction processing.

The system described is only a single domain and does not involve using a personal identification number (PIN). Verification of the user's identity is at the host and without a PIN there is no bar to users using stolen cards for transactions.

European Patent Publication 18129 (Motorola Inc.) describes a method of providing security of data on a communication path. Privacy and security of a dial-up data communications network are provided by means of either a user or terminal identification code together with a primary cipher key. A list of valid identification codes and primary cipher key pairs is maintained at the central processing unit. Identification code and cipher key pairs, sent to the cpu are compared with the stored code pairs. A correct comparison is required before the cpu will accept encoded data sent from the terminal. All data sent over the network is ciphered to prevent unauthorised access using the relevant user or temrinal key.

The system described is a single domain in which all terminal keys (or user keys) must be known at a central host location. Hence, the ideas described in the patent do not address a multi-host environment and thus are not addressing the interchange problem either.

UK Patent Application 2,020,513A (Atalla Technovations) describes a method and apparatus which avoids the need for transmitting user-identification information such as a personal identification number (PIN) in the clear from station to station in a network such as described in the two European Patent Publications mentioned above. The PIN is encoded using a randomly generated number at a user station and the encoded PIN and the random number are sent to the processing station. At the processing station a second PIN having generic application is encoded using the received random number and the received encoded PIN and the generic encoded PIN are compared to determine whether the received PIN is valid.

This system does not use a personal key and as a consequence for a sufficiently cryptographically secure system, it is necessary to have a PIN with at least fourteen random characters (four bits each). This is a disadvantage from the human factor point of view as users will have difficulty remembering such a long string of characters and the chances of inputting unintentionally an incorrect string is very large. If a phrase, which a user can easily remember, is employed for a PIN, about 28 characters are required. Although remembering the information is not a problem, inputting such a long string of data still presents a human factors problem.

The EFT system made possible by the systems described in the above patent applications is limited to a single host cpu holding the accounts of all users, both retailers and customers.

An EFT system in which may card issuing organizations (banks, credit card companies, etc.) are connected and many hundreds of retail organizations are connected through switching nodes such as telephone exchanges, brings many more security problems.

PCT publication Wo 81/02655 (Marvin Sendrow) describes a multi-host, multi-user system in which the PIN is ciphered more than once at the entry terminal. The data required to validate and authorise the transactions is transmitted to a host computer which accesses from its stored data base the data that is required to decipher and validate the transaction, including the ciphered PIN. A secret terminal master key must be maintained at each terminal. A list of these master keys is also maintained at the host computer.

The maintaining of lists of terminal master keys at each of the card issuing organisation's host computers is obviously a difficult task, in a complex system where the terminal keys are not controlled and, therefore, not known by the card issuing host.

European Patent Publication 55580 (Honeywell Information Systems) seeks to avoid the necessity of transmitting PIN information in the network by performing PIN verification at the entry point terminal. This is achieved by issuing each user with a card that has encoded in the magnetic stripe the bank identification (BIN), the user's account number (ACCN) and a PIN offset number. The PIN offset is calculated from the PIN, BIN and ACCN. The user enters the PIN at a keyboard attached to the terminal, which also reads the PIN offset, BIN and ACCN from the card. The terminal then re-calculates a PIN offset from the user's entered PIN, the BIN and ACCN. If the re-calculated PIN offset is the same as the PIN offset read from the card then verification of the PIN is assumed. This approach has the advantage in that the system is not involved in the validation and that knowing that the PIN offset is calculated from the PIN, the BIN and ACCN, anyone having knowledge of the process can manufacture fraudulent cards with valid PINS.

Advances in microcircuit chip technology has now led to the possibility that user cards instead of having user data stored on a magnetic stripe can contain a microprocessor with a read only store (ROS). The microprocessor is activated when the card is placed in an EFT terminal and the appropriate power and data transmission interface connections are made. The microprocessor on the card is controlled by control programs stored in the ROS. The users and issuers identification can also be stored in the ROS together with other information.

Examples of such cards including a microprocessor are shown in United Kingdom Patent Applications 2,081,644A and 2,095,175A.

European Patent Application No. 82306989.3 (IBM) which is considered as comprised in the state of the art according to Article 54 (3) and (4) EPC describes a method and apparatus for testing the validity of personal identification numbers (PIN) entered at a transaction terminal of an electronic funds transfer network in which the PIN is not directly transmitted through the network. The PIN and the personal account number (PAN) are used to derive an authorisation parameter (DAP). A unique message is sent with the PAN to the host processor where the PAN is used to identify a valid authorisation parameter (VAP). The VAP is used to encode the message and the result (a message authentication code MAC) transmitted back to the transaction terminal. The terminal generates a parallel derived message authentication code (DMAC) by using the DAP to encode the message. The DMAC and MAC are compared and the result of the comparison used to determine the validity of the PIN.

In such a system the generation of DAP as well as VAP is based on a short PIN only and is therefore crytographically weak. Furthermore, the EFT transaction terminal has access to all the information carried on the identity card which may be regarded as a security weakness in the system. The present invention seeks to overcome such deficiencies by storing personal key data in a portable personal processor carried on a card and only processing the key data on the card.

In any multi-domain communication network where such domain includes a data processor and in which cryptographically secure transmission takes place it is necessary to establish cross domain keys. A communication security system in which cross domain keys are generated and used is described in United States Patent No. 4,227,253 (IBM). The patent describes a communication security system for data transmissions between different domains of a multiple domain communication network where each domain includes a host system and its associated resources of programs and communication terminals. The host systems and communications terminals include data security devices each having a master key which permits a variety of cryptographic operations to be performed. When a host system in one domain wishes to communicate with a host system in another domain, a common session key is established at both host systems to permit cryptographic operations to be performed. This is accomplished by using a mutually agreed upon cross-domain key known by both host systems and does not require each host system to reveal its master key to the other host system. The cross domain key is enciphered under a key encrypting key at the sending host system and under a different key encrypting key at the receiving host system. The sending host system creates an enciphered session key and together with the sending cross-domain key performs a transformation function to re-encipher the session key under the cross domain key for transmission to the receiving host system. At the receiving host system, the receiving host system using the cross-domain key and the received session key, performs a transformation function to re-encipher the received session key from encipherment under the cross domain key to encipherment under the receiving host system master key. With the common session key now available in usable form at both host systems, a communication session is established and cryptographic operations can proceed between the two host systems.

UK Patent Application 2,050,021 provides a method and means for establishing an encrypting key which need not be known even to authorised individually once it is properly established. The key is established using data which must be on file about a terminal and helps to exclude the attachment of unauthorised terminals to the system.

Reference to the following publications are included as giving general background information in encryption techniques and terminology:

1. IBM Technical Disclosure Bulletin, Vol. 19, No. 11, April 1977 p 4241, "Terminal Master Key Security" by S. M. Matyas and C. H. Meyer.

2. IBM Technical Data Bulletin, Vol. 24, No. 1B, June 1981 pp 561—565 "Application for Personal Key Crypto with Insecure Terminals" by R. E. Lennon, S. M. Matyas, C. H. Meyer and R. E. Shuck;

3. IBM Technical Data Bulletin, Vol. 24, No. 7B, December 1981 pp 3906—3909 "Pin Protection/ Verification for Electronic Funds Transfer" by R. E. Lennon, S. M. Matyas and C. H. Meyer;

4. IBM Technical Disclosure Bulletin, Vol. 24, No. 12, May 1982, pp 6504—6509 "Personal Verification and Message Authentication Using Personal Keys" by R. E. Lennon, S. M. Matyas and C. H. Meyer;

5. IBM Technical Disclosure Bulletin, Vol. 25, No. 5, October 1982, pp 2358—2360 "Authentication with Stored KP and Dynamic PAC" by R. E. Lennon, S. M. Matyas and C. H. Meyer.

GB 2050021 discloses a transaction initialization process for establishing an encryption key for a transaction betweeen a central processor and a terminal having a non secret ID and an authorised user owning a secret verification PIN which becomes, in effect, the PIN of the terminal. To establish a transaction, the sequence number SEQ NO and the terminal ID are sent to the Central Processor which already stores the established PIN, and thus, after retrieval and possible decoding, can see SEQ NO, ID and PIN, the authorised user entering the PIN into the terminal. At both CPU and terminal, the same encryption operation takes place using all three "inputs" and the high order bits TRAC only of the result are transmitted from terminal to CPO for comparison to establish authority, after which an encrypted session key is sent from the CPU to the terminal.

This arrangement implies long operands, authorised users specific to terminal, terminals specific to a host and long term session keys, their validity for all transactions in a session or a day being mentioned. The arrangement of itself cannot distinguish between users of a terminal, nor is it intended to as it sets out to establish the terminal/processor connection validity under the control of an authorised user for subsequent use by others.

The present invention seeks to permit distinction to be made between different users of any particular terminal and to provide for session keys particular to the material part of each transaction, though it does borrow the session key of the previous transaction to establish initial terminal/ processor communication.

A home banking system may be characterised as a system which has a small number of a bank's valued customers as users. Users of the system provide their own terminal equipment, for example, a personal computer or a television set with a keyboard etc. A set of equipment may well be shared by many users of equipment (Home and Office). The system will have security requirements that cover the control of access to private information, authentication of a series of transactions and authorisation to perform that series of transactions.

According to the present invention there is provided a data communication system including a host data processor connected through a communication network to a plurality of message source units, each unit including a validity module and in which the host data processor for each validity module issues and stores an initial current transaction session key (VM key n), and for each user of the system issues and stores an authentication parameter (UAP)], derived from a first part or identity number (UID), which is stored on a user's input device and a second part, or secret number (UPW), which is stored or remembered separately by the user;

and when a transaction is initiated at a message source unit by a user the validity module includes means to construct and transmit to the host data processor a first message (MSG 1) including the user's identity number (UID) and a message authentication code (MAC 1) based upon the current transaction session key (VM key n);

the host data processor includes first means to regenerate a message authentication code (MAC 1) when a first message (MSG 1) is received, and to compare the regenerated message authentication code with the received message authentication code;

second means to generate a random or pseudo random key (RN key);

third means to generate a new transaction session key (VM Key n + 1) based upon the random key, (MAC 1) the users authentication paramater (UAP) and the current session key (VM key);

fourth means to construct and transmit to the validity module a second message (MSG 2) include the user authentication parameter (UAP) enciphered using the current transaction key (VM key n), and the random key enciphered using the user authentication parameter;

whereby the validity module includes means operable upon receipt of the user's second parameter (secret number) (UPW) to regenerate the user's authentication parameter (UAP) and

means which upon receipt of the second message (MSG 2) can compare the received authentication parameter (UAP) with the regenerated authentication parameter (UAP) for validity of the user's input and using the validated authentication parameter can decipher the random key and regenerate and store the new transaction session key for use with the next messages transmitted to the host data processor.

According to a second aspect of the invention there is provided a method of updating session encipher keys in a data communication system in which a host-data processor is conencted through a communication network to a plurality of message source units, each unit including a validity module and in which the host data processor for each validity module issues and stores an initial current transaction session key, (VM key n) and for each user of the system issues and stores an authentication parameter (UAP), derived from a first part or identity number (UID), which is stored on a user's input device and a second part, or secret number (UPW), which is stored or remembered separately by the user;

a) including the steps of when a transaction is initiated at a message source unit by a user the validity module constructing and transmitting to the host data processor a first message (MSG 1) including the user's identity number (UID) and a message authentication code (MAC 1) based upon the current transaction session key (VM key);

b) at the host data processor regenerating a message authentication code (MAC 1) when a first message is received, and comparing the regenerated message authentication (MAC 1) code with the received message authentication code (MAC 1).

c) generating a random or pseudo random key (RN key),

d) generating a new transaction session key (VM Key n + 1) based upon the random key, the user's authentication parameter (UAP) and the current session key (VM key),

e) constructing and transmitting to the validity module a second message (MSG 2) including the user authentication parameter (UAP) enciphered using the current transaction key (VM key), and the random key enciphered using the user authentication parameter;

f) at the validity module regenerating upon receipt of the user's second parameter, the user's authentication parameter (UAP); and

g) upon receipt of the second message (MSG 2) comparing the received authentication parameter (UAP) with the regenerated authentication parameter (UAP) for validity of the user's input and using the validated authentication parameter to deciphering the random key and regenerating and store the new transaction session key (VM Key n + 1) for use with the next messages transmitted to the host data processor.

In order that the invention may be fully understood a preferred embodiment thereof will now be described with reference to the accompanying drawings in which:

Fig. 1 is a schematic showing the major components of a home banking data communication system.

Fig. 2 shows in diagrammatic form the component parts of a host bank's central processor.

Fig. 3 shows in decipherment form the component parts of a validity module.

The particular embodiment of the invention relates to security techniques to be employed in a 'home banking' system. A bank's data processing centre connected to customers through a public switch system (PSS) needs to know that messages received from a terminal originate from a valid device, i.e. one that the bank has authorised, and that the user is a valid user.

In the preferred embodiment for each terminal-message source unit there is a validity module, which may be portable between terminals. Each validity module is issued with an identity (VMID), a seed number (VMSeedn), an initial transaction key (VMKEYn), the bank identity address (HIID) and an index number (VMNDX). The bank stores all these indexed by VMID. When a user initiates a transaction the terminal constructs a first message including VMID and the user's identity UID with a message authentication code (MAC1) generated using VM KEYn.

The bank has for each user a user identity (UID) and a user secret number (UPW) (Equivalent to PAN and PIN in other applications). When a first message is received the bank data processing centre uses VMID to obtain its own version of VM KEYn and then regenerates MAC1 and compares the received MAC1 with the regenerated MAC1. If this operation is successful then a random key (RNKEY) is generated and using the RNKEY and the seed VMSeedn with VMID a new transaction session key (VM KEY n + 1) is generated. A new seed (VM Seed n + 1) is also generated using the RNKEY and the old seed.

A second message (MSG2) is created including an authorisation parameter (UVP) based upon UID and UPW enciphered using VMSeedn and VMKEYn this term is called UAP (user authentication parameter). The message also includes the RNKEY enciphered using UVP, VMSeedn, VMID.

When the terminal receives MSG2 and the user inputs UPW (PIN) it can recreate UVP, and compare the recreated UVP with the received deciphered UVP. The terminal can then decipher RNKEY and recreate its own versions of VMKEY n + 1 and VM Seednl. The new transaction session key and seed are used for the authentication of the next message sent from the terminal.

Using this system an outsider cannot emulate a validity module or pretend to be a bank as the critical parameters are changed with each usage of the module, thus providing a highly secure system.

Features of the invention include the secure updating of session keys, the confirmation of validity of each validity module and the confirmation of the host validity, by using the the authorisation parameter (UVP) itself enciphered under a key which is only used for one message transfer.

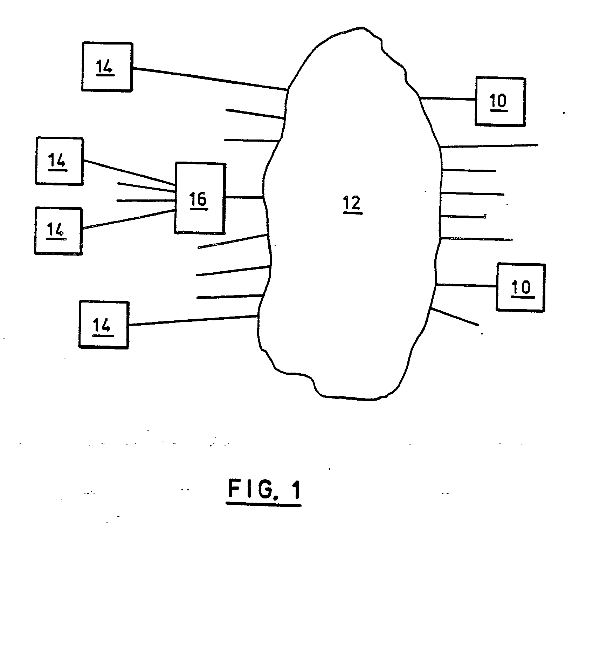

Referring now more particularly to Fig. 1 there is shown in schematic form the major components of a home banking system.

The host data processing centres 10 of banks and similar financial institutions are connected through suitable interfaces to a communications medium such as a public pocket switched network (PSS) 12. Customers or users of the system interact with it through terminal devices 14 which are connected to the communications medium.

The terminal 14 may be a personal computer, a television set with a keyboard such as is used for a videotex system, or any other suitable input/ output display device. The terminals may be directly connected to the PSS 12 through modems or be connected through a local node such as shown at 16. Each terminal for the home banking system embodying the present invention must be capable of interconnecting with a validation module (VALMOD).

A validation module is one of a variety of physical devices including an intelligent secure card, a portable PIN PAD, a complete terminal or a logic module installed in a terminal.

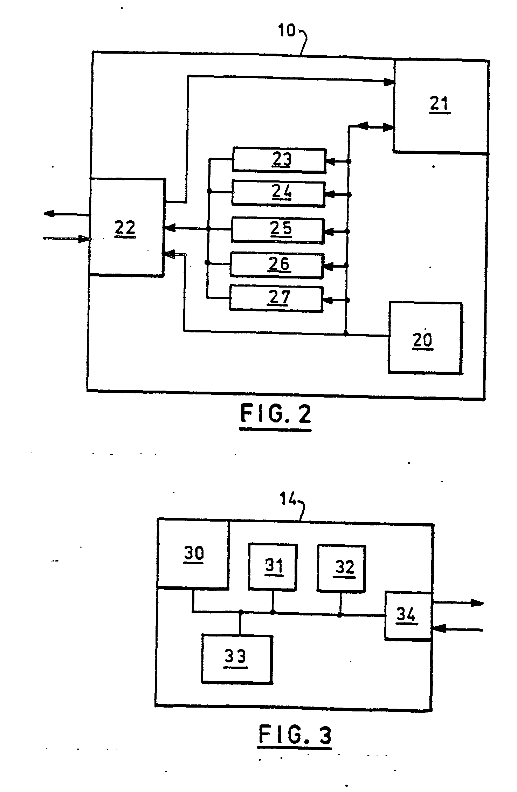

Fig. 2 shows in diagrammatic form the component parts of a host bank's central processor used in the preferred embodiment. The processor 10 has a control unit 20 which contains the microcode for controlling the operations. A store 21 which may be an external disc store or any similar device is connected to a transmit-receive module 22. The Tx/Ra Module 22 may itself include a modem which is connected to the communication medium (PSS 12 Fig. 1). A message authentication generator 23, a random number generator 24, a transaction key generator 25, a message construction register 26 and an encipher/decipher unit are connected on a common bus to the store 21 and control unit 20. Incoming messages may be routed directly to the store 21 and outgoing messages either transmitted directly from the message construction register 26 or via the store 21.

Of course in a multi-processor the unit of Fig. 2 may not be separately identifiable as the control program will allocate tasks to registers and processing units according to the priorities of the operating system.

Fig. 3 shows in diagrammatic form the component parts of a validity module 14. These include a microprocessor 30, a random access store 31, a read only store 32 which contains the microcode control for the module and an encipher-decipher unit 33. A common bus connects the units to a transmit-receive unit 34. Messages are initially generated and stored in the random access store 31 before transmission to the Tx/Rx unit 34. Received messages are stored before the unit operates on them.

A validity module itself may not include all the component parts of Fig. 3. For example the Tx/Rx unit 34 and the microprocessor 30 may be units of a terminal to which the validity module is conn ected of the transaction to take place.

The system operates in the following manner. The financial institution or bank issues validation modules (VALMODS) to its patrons or locations from which patrons may wish to interact with that particular issuer's system (e.g. Bank Branches). The VALMODS may therefore be shared among many patrons or moved between locations, and the patrons may use any module issued by the financial institution. Patrons requiring access to data at the host system of the institution are issued with a user identity number (UID) and a user password (UPW) and must use a validation module also issued by that institution. In a banking context the UID is equivalent to a personal account number (PAN) and the password is equivalent to a personal identity number (PIN).

A VALMOD is supplied with the following information stored within it.

Issuing a Validation Module

The VALMOD is supplied with the following information stored within it.

(a) VALMOD identity (VMID)

(b) A secret hexadecimal data value (VM Seed n)

(c) A secret encipherment key value (VM Key n)

(d) An index number set to zero (VMNDX = n)

(e) The identity of the user host (HIID), this could be a PSS network user address for example.

This information is also stored at the host site indexed by VMID. The secret data would normally be protected at the host by encipherment under a data enciphering key DKey in the form $E_{DKey}$(VM Seed n). The secret key will be store enciphered under the host master key at the host site in the form $E_{HMKo}$(VM Key n).

UID is determined by the organisation and acts as an index into its user data bank. UPW is a random number generated by the organisation for use with that specific UID. The UID and UPW are provided to the user under separate cover. The two values are combined to form a user authorisation parameter of 8 hexadecimal bytes (UVP). The form of combination is not important so long as information is not lost, and the function is reproducable on demand. UVP is stored at the host site as an encipherment key in the form $E_{HMKo}(UVP)$, and is indexed by the UID.

Using the System

1. A user approaches the VALMOD and provides his UID (e.g. via a magnetic stripe card or a keyboard) the VALMOD stores this UID.

2. The VALMOD compiles a message including MSG1 containing HIID VMID VMPAR (0 or 1 depending upon the parity of VMNDX) and UID.

3. The VALMOD generates a message authentication code MAC1 for MSG1 using VM Key n.

4. MSG1, MAC1 is then sent to the issuer.

5. If the parity of VMNDX is correct, the issuer generates MAC1 of reference using the received MSG1 and the stored VM Key n (otherwise the issuer uses the old values VM Key n − 1 and VM Seed n − 1). If the reference is not the same as the received MAC1 the transaction is aborted.

6. If MAC1 is valid then the issuer checks the UID, if this is valid then the issuer randomly generates an encryption key RNKey.

a) VM Seed n + 1 = $E_{RNKey}$(VM Seed n)

b) VM Key n + 1 = $E_{RNKEY}$(VM Seed nOVMID)

c) UAP = $E_{VMKeyn}$(EUVP(VMSEED$_n$))

d) UAKEY = $E_{VMKeyn}$(EUVP(VMSEEDnOVMID)

e) NEWKEY = $E_{UAKEY}$(RNKEY)

The issuer stores items a and b and discards item d.

7. The issuer compiles a message MSG2 including UAP and NEW KEY and appends a message authentication code MAC2 for MSG2 using VM KEY n.

8. The issuer sends MSG2, MAC2 to the VALMOD which validates MAC2 using the stored VM KEYn. If the validation fails the transaction is aborted.

9. The VALMOD requests the UPW of the user. Combines this with the stored UID to create a UVP to be validated.

10. The VALMOD generates UAP of reference using its UVP and stored VM KEYn as in step 6c. If this is not the same as the received UAP then the transaction is aborted.

11. The VALMOD generates UAKEY as in step 6d using the validated UVP and stored VMSEEDn. it uses UAKEY to decipher the received NEWKEY to obtain RNKEY.

12. The VALMOD uses the stored VMSEEDn and the received RNKEY to generate VMSEEDn + 1 and VMKEYn + 1 as in steps 6a and 6b. These replace VMSEEDn and VMKEYn in the VALMOD and VMNDX is incremented by one.

13. The VALMOD generates a confirmation message MSG3 including the contents of MSG1 but with an authentication code for MSG3 generated using VMKEYn + 1. This is sent to the issuer.

14. Upon receipt of this the issuer validates MAC3 using the stored VMKEYn + 1, if this fails the transaction is aborted and the VALMOD is declared out of synchronisation (it cannot be used again until reissued).

15. The issuer now replaces VMSEEDn with VMSEEDn + 1 and VMKEYn with VMKEYn + 1 each enciphered under the appropriate keys.

The outcome of the operation is that the VALMOD has performed a synchronised change of its secret data with the issuer only on the following conditions.

a) The VALMOD is valid and already synchronised

b) The user is valid and authentic

Proof of these conditions being met are provided in MAC3.

Implications

The recording of messages between VALMOD and Issuer will not enable an outsider to emulate the VALMOD or pretend to be an issuer as the critical parameters (VMSEED and VMKEY) are changed in each usage of the VALMOD. This provides for a highly secure system.

The receipt of MSG3 provides access to the user of all legitimate user data and facilities at the issuer host via the user's own terminal. A series of draft transactions are performed and checked by the terminal user. This communication is authenticated by generating MAC3 using VMKEYn + 1.

Upon completion of all desired work, it is necessary to obtain the authority of the customer to transact the draft transactions. This is done by a 'completed' message being sent to the issuer. This results in another iteration of the VALMOD sequence including re-entry of the PIN (UPW).

Receipt of MSG3 authenticated now using FM KEY n + 2 (newly agreed) is the issuer's authority to proceed. An acknowledgement to this effect authenticated in VMKEY3 would be returned to the user's terminal.

Issuing the UID and UPW

The following table illustrates the above method by showing the items stored and generated at the VALMOD and host processors during the operation of a transaction session and the composition of the Messages MSG1, MSG2, and MSG3 relating to the validation.

Initially

| Stored at VALMOD | Stored at Host |
| --- | --- |
| VMID | VMID |
| VM Seed n | VM Seed n |
| VM Key n | VM Key n |
| VMNDX | VMNDX |
| HIID | UID |
| HIID | UVP |
| Entered | |
| UID | |

MSG1 includes [HIID, VMID, VMPAR (based upon VMNDX) UID, MAC1 (based upon VM Key n)] Sent from VALMOD to Host

Host generate
MAC1
RN Key
VM Seed n + 1
VM Key n + 1
UAP
UA Key
New Key

MSG2 includes [VMID, UAP (based upon VM Key n, VM Seed n (UVP)), New Key (based upon UA Key, RN Key (UVP)), MAC2 (based upon VM Key n)]

Sent from Host to VALMOD.
VALMOD generates from entered UPW
UVP
UAP
UA Key
RN Key
VM Seed n + 1
VM Key n + 1

MSG3 includes [HID, VMID, VMPAR, UID, MAC3 (based upon VM Key n + 1)]
Sent from VALMOD to Host.
Both VALMOD and Host now store VM Seed n+1 and VM Key n+1.
e At no stage are the new seeds and keys VM Seed n + 1 and VM Key n + 1 available outside the VALMOD and Host computer.

**Claims**

1. A data communication system including a host data processor (10) connected through a communication network (12) to a plurality of message source units, (14) each unit including a validity module (14) and in which the host data processor for each validity module issues and stores an initial current transaction session key (VM key n), and for each user of the system issues and stores an authentication parameter (UAP), derived from a first part or identity number (UID), which is stored on a user's input device and a second part, or secret number (UPW), which is stored or remembered separately by the user;

and when a transaction is initiated at a message source unit (14) by a user the validity module includes means to construct and transmit to the host data processor a first message (MSG 1) including the user's identity number (UID) and a message authentication code (MAC 1) based upon the current transaction session key (VM key n);

the host data processor includes first means to regenerate a message authentication code (MAC 1) when a first message (MSG 1) is received, and to compare the regenerated message authentication code with the received message authentication code;

second means to generate a random or pseudo random key (RN key);

third means to generate a new transaction session key (VM Key n + 1) based upon the random key, (MAC 1) the users authentication paramater (UAP) and the current session key (VM key);

fourth means to construct and transmit to the validity module a second message (MSG 2) include the user authentication parameter (UAP) enciphered using the current transaction key (VM key n), and the random key enciphered using the user authentication parameter;

whereby the validity module includes means operable upon receipt of the user's second parameter (secret number) (UPW) to regenerate the user's authentication parameter (UAP) and

means which upon receipt of the second message (MSG 2) can compare the received authentication parameter (UAP) with the regenerated authentication parameter (UAP) for validity of the user's input and using the validated authentication parameter can decipher the random key and regenerate and store the new transaction session key (VM key n + 1) for use with the next messages transmitted to the host data processor.

2. A data communication system as claimed in claim 1 in which the message source units include portable validity modules.

3. A method of updating session encipher keys in a data communication system in which a host data processor (10) is conencted through a communication network (12) to a plurality of message source units, (14) each unit including a validity module (14) and in which the host data processor for each validity module issues and stores an initial current transaction session key, (VM key n) and for each user of the system issues and stores an authentication parameter (UAP), derived from a first part or identity number (UID), which is stored on a user's input device and a second part, or secret number (UPW), which is stored or remembered separately by the user;

a) including the steps of when a transaction is initiated at a message source unit by a user the validity module constructing and transmitting to the host data processor a first message (MSG 1) including the user's identity number (UID) and a message authentication code (MAC 1) based upon the current transaction session key (VM key n);

b) at the host data processor regenerating a message authentication code (MAC 1) when a first message is received, and comparing the regenerated message authentication (MAC 1) code with the received message authentication code (MAC 1).

c) generating a random or pseudo random key (RN key),

d) generating a new transaction key (VM Key n + 1) based upon the random key, the user's authentication parameter (UAP) and the current session key (VM key n),

e) constructing and transmitting to the validity module a second message (MSG 2) including the user authentication parameter (UAP) enciphered using the current transaction key (VM key n), and the random key enciphered using the user authentication parameter;

f) at the validity module regenerating upon receipt of the user's second parameter (UPW), the user's authentication parameter (UAP); and

g) upon receipt of the second message (MSG 2) comparing the received authentication parameter (UAP) with the regenerated authentication parameter (UAP) for validity of the user's input and using the validated authentication parameter to deciphering the random key and regenerating and store the new transaction session key (VM Key n + 1) for use with the next messages transmitted to the host data processor.

4. A method of updating session encipher keys as claimed in claim 3 in which the message source units include portable validity modules.

## Patentansprüche

1. Datenübermittlungssystem enthaltend einen zentralen Prozessor (10), welcher über ein Nachrichtennetz (12) an eine Mehrzahl von Nachrichtenquelleneinheiten (14) angeschlossen ist, wobei jede Einheit ein Gültigkeitsmodul (14) enthält und worin der zentrale Prozessor für jedes Gültigkeitsmodul einen anfänglichen laufenden Transkationssitzungsschlüssel (VM—Schlüssel n) ausgibt und speichert und für jeden Benutzer des Systems einen Bereichtigungsparameter (UAP) ausgibt und speichert, welcher von einem ersten Teil oder Identitätsnummer (UID), welche auf einer Benutzer-Eingabevorrichtung gespeichert ist, und von einem zweiten Teil oder Geheimnummer (UPW), welche vom Benutzer getrennt gespeichert oder auswendig gewusst wird, abgeleitet ist;

und wenn eine Transaktion an einer Nachrichtenquelleneinheit (14) von einem Benutzer eingeleitet wird, enthält das Gültigkeitsmodul Mittel zur Erzeugung und Übertragung an den zentralen Prozessor einer ersten Nachricht (MSG 1), welche die Identitätsnummer (UID) des Benutzers und einen Nachrichtenberechtigungscode (MAC 1) enthält, der auf dem laufenden Transaktionssitzungsschlüssel (VM—Schlüssel n) beruht;

der zentrale Prozessor enthält erste Mittel zum Regenerieren eines Nachrichtenberechtigungscodes (MAC 1), wenn eine erste Nachtricht (MSG 1) empfangen wird, und zum Vergleich des regenerierten Nachrichtenbereichtigungscodes mit dem empfangenen Nachrichtenberechtigungscode,

zweite Mittel zur Erzeugung eines Zufalls- oder Pseudozufallsschlüssels (RN—Schlüssel),

dritte Mittel zur Erzeugung eines neuen Transaktionssitzungsschlüssels (VM—Schlüssel n + 1), welcher auf dem Zufallsschlüssel, dem (MAC 1)-Code, dem Benutzer-Berechtigungsparameter (UAP) und dem laufenden Sitzungsschlüsse (VM-Schlüssel) beruht,

vierte Mittel zur Gestaltung und Übertragung an das Gültigkeitsmodul einer zweiten Nachricht (MSG 2), welche den mittels des laufenden Transaktionsschlüssels (VM—Schlüssel n) verschlüsselten Benuzter-Berechtigungsparameter (UAP) und den mittels des Benuzter-Berechtigungsparameters verschlüsselten Zufallsschlüssel beinhaltet;

wobei das Gültigkeitsmodul Mittel enthält, die auf den Empfang des zweiten Anwenderparameters (Geheimnummer) (UPW) einwirken, um die Berechtigungsparameter (UAP) des Benutzers zu regenerieren und

Mittel, welche bei Empfang der zweiten Nachricht (MSG 2) den empfangenen Berechtigungsparameter (UAP) mit dem regenerierten Berechtigungsparameter (UAP) zur Gültigkeit der Anwender-Eingabe vergleichen können und mittels des bestätigten Berechtigungsparameters den Zufallsschlüssel entschlüsseln und den neuen Transaktionssitzungsschlüssel (VM—Schlüssel n + 1) zur Benutzung mit den nächsten, an den zentralen Prozessor übertragenen Nachrichten regenerieren und speichern können.

2. Datenübermittlungssystem nach Anspruch 1, in welchem die Nachrichtenquelleneinheiten tragbare Gültigkeitsmodule beinhalten.

3. Verfahren zur Aktualisierung von Sitzungscodierungsschlüsseln in einem Datenübermittlungssystem, in welchem ein zentraler Prozessor (10) über ein Nachrichtennetz (12) an eine Mehrzahl von Nachrictenquelleneinheiten angeschlossen ist, wobei jede Einheit ein Gültigkeitsmodul (14) beinhaltet, und worin der zentale Prozessor für jedes Gültigkeitsmodul einen anfänglichen laufenden Transaktionssitzungsschlüssel (VM—Schlüssel n) ausgibt und speichert, und für jeden Benutzer des Systems einen Berechtigungsparameter (UAP) ausgibt und speichert, welcher von einem ersten Teil oder Identitätsnummer (UID), welche auf einer Benutzer-Eingabevorrichtung gespeichert wird, und von einem zweiten Teil oder Geheimnummer (UPW), welche vom Benutzer getrennt gespeichert oder auswendig gewusst wird, abgeleitet ist;

a) enthaltend die Schritte zum Einleiten einer Transkation an einer Nachrichtenquelleneinheit durch einen Benutzer, wobei das Gültigkeitsmodul eine erste Nachricht (MSG 1) gestaltet und dem zentralen Prozessor übermittelt, welche die Benutzer-Identitätsnummer (UID) und einen Nachrichtenbereichtigungscode (MAC 1) enthält, die auf dem laufenden Transaktionssitzungsschlüssel (VM—Schlüssel n) beruhen;

b) am zentralen Prozessor, welcher einen Nachrichtenberechtigungscode (MAC 1) regeneriert, wenn eine erste Nachricht empfangen wird, und den regenerierten Nachrichtenberechtigungscode (MAC 1) mit dem empfangenen Nachrichtenberechtigungscode (MAC 1) vergleicht.

c) Erzeugung eines Zufalls- oder Pseudozufallsschlüssels (RN—Schlüssel),

d) Erzeugung eines neuen Transaktionssitzungsschlüssels (VM—Schlüssel n + 1), welcher auf dem Zufallsschlüssel, dem Benutzer-Berechtigungsparameter (UAP) und dem laufenden Sitzungsschlüssel (VM—Schlüssel n) beruht,

e) Gestaltung und Übertragung einer zweiten Nachricht (MSG 2) an das Gültigkeitsmodul, welche den mittels des laufenden Transaktionsschlüssels (VM—Schlüssel n) verschlüsselten Benutzer-Berechtigungsparameter (UAP) and den mittels des Benutzer-Berechtigungsparameters verschlüsselten Zufallsschlüssel beinhaltet;

f) beim Gültigkeitsmodul, Regenerierung, bei Empfang des zweiten Benutzer-Parameters (UPW), des Benutzer-Berechtigungsparameters (UPA), und

g) bei Empfang der zweiten Nachricht (MSG 2), Vergleich des empfangenen Berechtigungsparameter (UAP) mit dem regenerierten Berechtigungsparameter (UAP) zur Gültigkeit der Benutzer-Eingabe und mittels des bestätigten Berechtigungsparameters zur Entschlüsselung des Zufallsschlüssels und zur Regenerierung und Speicherung des neuen Transaktionssitzungsschlüssels (VM-Schlüssel n+1) zur Benutzung mit den nächsten dem zentralen Prozessor übermittel Nachrichten.

4. Verfahren zur Aktualisierung von Sitzungscodierungsschlüsseln nach Anspruch 3, in welchem die Nachrichtenquelleneinheiten tragbare Gültigkeitsmodule beinhalten.

**Revendications**

1. Système de communication de données incluant un processeur central de traitement de données (10), raccordé par l'intermédiaire d'un réseau de communication (12) à une pluralité d'unités (14) constituant des sources de messages, dont chacune contient un module de contrôle de validité (14), et dans lequel le processeur central de traitement des données délivre et mémorise, pour chaque module de contrôle de validité, un code initial de session de transfert actuel (Code VM n), et délivre et mémorise, pour chaque utilisateur du système, un paramètre d'authentification (UAP), tiré d'une première partie, ou numéro d'identité (UID), qui est mémorisée dans un dispositif d'entrée de l'utilisateur, et d'une seconde partie, ou numéro secret (PW), qui est mémorisée ou rappelée séparément par l'utilisateur;

et, lorsqu'un transfert est déclenché dans une unité (14) formant source de message par un utilisateur, le module de contrôle de validité comprend des moyens permettant de créer et de transmettre au processeur central de traitement des données, un premier message (MSG 1) incluant le numéro d'identité (UID) de l'utilisateur et un code d'authentification de message (MAC 1) sur la base du code de session de transfert actuel (Code VM n);

le processeur central de traitement des données inclut des premiers moyens pour régénérer un code d'authentification de message (MAC 1) lors de la réception d'un premier message (MSG 1), et comparer le code régénéré d'authentification de message au code reçu d'authentification de message,

des seconds moyens pour produire un code aléatoire ou pseudo-aléatoire (code RN),

des troisièmes moyens pour produire un nouveau code de session de transfert (code VM n + 1), sur la base du code aléatoire, du code (MAC 1), du paramètre (UAP) d'authentification de l'utilisateur et du code de session actuel (code VM n),

des quatrièmes moyens pour créer et transmettre au module de contrôle de validité un second message (MSG 2) incluant le paramètre (UAP) d'identificaton de l'utilisateur codé moyennant l'utilisation du code de transfert actuel (code VM n), et le code aléatoire codé moyennant l'utilisation du paramètre d'authentification de l'utilisateur;

le module de contrôle de validité incluant des moyens pouvant agir, lors de la réception du second paramètre d'utilisateur (nombre secret) (UPW) pour régénérer le paramètre (UAP) d'authentification de l'utilisateur, et

des moyens qui, lors de la réception du second message (MSG 2) permettent de comparer le paramètre d'authentification reçu (UAP) au paramètre d'authentification régénéré (UPA) pour contrôler la validité de l'entrée de l'utilisateur et, moyennant l'utilisation du paramètre d'authentification validé, peuvent décoder le code aléatoire et régénérer et mémoriser le nouveau code de session de transfert (code VM n + 1) pour son utilisation dans les messages suivants envoyés au processeur central de traitement des données.

2. Système de communication de données selon la revendication 1, dans lequel les unités formant sources de messages incluent des modules portables de contrôle de validité.

3. Procédé pour mettre à jour des codes de codages de sessions dans un système de communication de données, dans lequel un processeur central de traitement des données (10) est raccordé par l'intermédiaire d'un réseau de communication (12) à une pluralité d'unités (14) consituant des sources de messages, dont chacune contient un module de contrôle de validité (14), et dans lequel le processeur central de traitement des données délivre et mémorise, pur chaque module de contrôle de validité, un code initial de session de transfert actuel (Code VM n), et délivre et mémorise, pour chaque utilisateur du système, un paramètre d'authentification (UAP), tiré d'une première partie, ou numéro d'identité (UID), qui est mémorisée dans un dispositif d'entrée de l'utilisateur, et d'une seconde partie, ou numéro secret (PW), qui est mémorisée ou rappelée séparément par l'utilisateur;

a) incluant les étapes comprenant, lorsqu'un transfert est déclenché par un utilisateur dans une unité formant source de messages contenant le module de contrôle de validité, la création et la transmission au processeur central de traitement des données, d'un premier message (SG 1) incluant le numéro d'identité (UID) de l'utilisateur et un code d'authentification de message (MAC 1) sur la base du code de session de transfert actuel (code VM n);

b) dans le processeur central de traitement des données, une régénération d'un code d'authentification de message (MAC 1) lors de la réception d'un premier message, et la comparaison du code d'authentification de message (MAC 1) régénéré au code d'identification de message (MAC 1) reçu,

c) la production d'un code aléatoire ou pseudo-aléatoire (code RN),

d) la production d'un nouveau code de session de transfert (code VM n + 1) sur la base du code aléatoire, du paramètre (UAP) d'authentification de l'utilisateur et du code de session actuel (code VM n),

e) la création et la transmission au module de contrôle de validité, d''un second message (MSG 2) incluant le paramètre (UAP) d'authentification de l'utilisateur, moyennant l'utilisation du code de transfert actuel (code VM n) et du code aléatoire codé moyennant l'utilisation du paramètre d'authentification de l'utilisateur;

f) dans le module de contrôle de validité, la régénération du paramètre (UAP) d'authentification de l'utilisateur lors de la réception du second paramètre (UPW) de l'utilisateur; et

g) lors de la réception du second message (MSG 2), une comparaison du paramètre d'authentification (UAP) reçu au paramètre d'identification (UAP) régénéré pour contrôler la validité de l'entrée de l'utilisateur, et l'utilisation du paramètre d'authentification validé pour décoder le code aléatoire et régénérer le nouveau code de session de transfert (code VM n + 1) pour son utilisation avec les messages suivantes envoyés au processeur central de traitement des données.

4. Procédé pour mettre à jour des codes de codage de sessions selon la revendication 3, selon lequel les unités formant sources de messages incluent des modules portables de contrôle de validité.

FIG. 1

FIG. 2

FIG. 3